(19) **Europäisches Patentamt**
**European Patent Office**
**Office européen des brevets**

(11) **EP 3 942 716 B1**

(12) **FASCICULE DE BREVET EUROPEEN**

(45) Date de publication et mention de la délivrance du brevet:
**01.01.2025 Bulletin 2025/01**

(21) Numéro de dépôt: **20702309.4**

(22) Date de dépôt: **03.02.2020**

(51) Classification Internationale des Brevets (IPC):
**H04J 3/06** (2006.01)    **H04W 4/46** (2018.01)
**H04W 56/00** (2009.01)

(52) Classification Coopérative des Brevets (CPC):
**H04J 3/0641; H04J 3/0644; H04J 3/0664; H04W 4/46; H04W 56/002; H04W 56/0025;** H04W 64/00

(86) Numéro de dépôt international:
**PCT/EP2020/052606**

(87) Numéro de publication internationale:
**WO 2020/187478 (24.09.2020 Gazette 2020/39)**

(54) **PROCÉDÉ ET DISPOSITIF DE CORRECTION DE L'HEURE DÉFINIE PAR UNE HORLOGE INTERNE D'UNE ENTITÉ**

VERFAHREN UND VORRICHTUNG ZUR KORREKTUR DER DURCH EINEN INTERNEN TAKT EINER ENTITÄT DEFINIERTEN ZEIT

METHOD AND DEVICE FOR CORRECTING THE TIME DEFINED BY AN INTERNAL CLOCK OF AN ENTITY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.03.2019 FR 1902274**

(43) Date de publication de la demande:
**26.01.2022 Bulletin 2022/04**

(73) Titulaire: **Ampere SAS**
**92100 Boulogne-Billancourt (FR)**

(72) Inventeurs:
• **BAGLIN, Matthieu**
**31170 Tournefeuille (FR)**
• **PERRAUD, Eric**
**31830 Plaisance du Touch (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**US-A1- 2017 034 800    US-A1- 2017 280 416**
**US-A1- 2019 053 178    US-B2- 9 392 565**

• **NTT DOCOMO: "Remaining details of SLSS based synchronization", vol. RAN WG1, no. Reno, USA; 20161114 - 20161118, 13 November 2016 (2016-11-13), XP051176632, Retrieved from the Internet <URL:http://www.3gpp. org/ftp/Meetings_3GPP_SYNC/RAN1/Docs/> [retrieved on 20161113]**

**Description**

DOMAINE TECHNIQUE DE L'INVENTION

La présente invention concerne de manière générale l'échange de messages entre des entités d'un système de transport intelligent.

Elle concerne en particulier l'échange de message entre un véhicule automobile et une autre entité quelconque.

Elle concerne plus particulièrement un procédé de correction de l'heure définie par une horloge interne d'une entité apte à recevoir des signaux d'un système de positionnement par satellites et à communiquer avec au moins une autre entité.

Elle concerne également un dispositif de correction de l'heure définie par une horloge interne d'une entité apte à recevoir des données d'un système de positionnement par satellites et à communiquer avec au moins une autre entité.

ETAT DE LA TECHNIQUE

L'échange de données entre entités d'un système de transport intelligent (ou STI), par exemple entre véhicules automobiles grâce aux systèmes de communication sans fil dénommés « V2X », est aujourd'hui un moyen efficace de fournir aux intervenants de la route (conducteurs et piétons) des informations et alertes anticipées sur leur environnement, en particulier concernant des événements se produisant en dehors de leur champ de vision.

Afin que les événements associés aux messages échangés soient évalués et interprétés de manière efficace, les différentes entités du système de transport intelligent doivent être temporellement synchronisées. Cette synchronisation est par exemple réalisée par une référence commune d'un système de positionnement par satellites (ou GNSS pour « Global Navigation Satellite System » selon l'acronyme d'origine anglo-saxonne couramment utilisé). Les messages contenant les données sont ainsi précisément horodatés, ce qui permet une interprétation utile et cohérente de ces messages par rapport au contexte environnant.

Cependant, dans certaines situations, la synchronisation temporelle n'est pas possible à mettre en oeuvre.

Le document EP3138304 décrit un procédé permettant de générer un horodatage d'événements transmis par message dans un véhicule. En particulier, ce procédé s'applique dans les cas où la réception du signal GNSS est insuffisante au démarrage du véhicule. Dans ce cas, la référence commune pour la synchronisation est indisponible et le système dans le véhicule va s'appuyer sur une base de temps locale pour dater les événements associés aux messages reçus et envoyés.

D'après ce document, cette base de temps locale est déterminée à partir de l'échange de messages spéciaux, dits de « synchronisation », entre le véhicule et un autre véhicule localisé dans la même zone géographique. Ces messages comprennent alors l'information d'horodatage permettant de définir la base de temps locale.

Ce document décrit également la possibilité de prendre en compte plusieurs horodatages associés à plusieurs autres véhicules localisés à proximité du véhicule d'intérêt afin de minimiser l'erreur sur la détermination de la base de temps locale.

Le document US2017034800 décrit un équipement utilisateur, «UE», qui ne connaît pas son positionnement et il détermine son positionnement par rapport à d'autres UE grâce au système dénommé «D2D». H

PRESENTATION DE L'INVENTION

La présente invention propose d'améliorer la synchronisation temporelle entre les entités d'un système de transport intelligent, en particulier dans le cas où l'une des entités n'est pas en mesure de recevoir des signaux d'un système de positionnement par satellites, afin d'établir une base de temps commune pour toutes les entités du système de transport intelligent.

Plus particulièrement, on propose selon l'invention un procédé de correction de l'heure définie par une horloge interne d'une entité tel que défini dans l'introduction, dans lequel il est prévu, lorsque les signaux ne permettent pas un positionnement par satellites de ladite entité (c'est-à-dire par exemple lorsque ladite entité est localisée en dehors de la couverture du système de positionnement par satellites ou lorsque la qualité du signal du système de positionnement par satellites n'est pas suffisante), des étapes de :

- réception, par ladite entité, d'un message en provenance de ladite autre entité, ledit message comprenant une première donnée temporelle associée à l'instant d'émission dudit message,
- détermination, par ladite entité, d'une deuxième donnée temporelle associée à l'instant de réception dudit message par ladite entité,
- calcul d'un écart temporel relatif à la différence entre la deuxième donnée temporelle et la première donnée temporelle, puis

- détermination d'une correction temporelle à apporter à l'heure définie par l'horloge interne de ladite entité en fonction dudit écart temporel,
l'étape de détermination d'une correction temporelle comprenant les sous-étapes de :

- détermination d'une deuxième donnée temporelle actualisé de manière à ce qu'un écart temporel théorique entre la deuxième donnée temporelle actualisée et la première donnée temporelle soit égal à une valeur déterminée, et
- détermination de la correction temporelle à partir de la deuxième donnée temporelle actualisée et de la deuxième donnée temporelle.

Ainsi, grâce à l'invention, lorsque l'entité est localisée en dehors de la couverture d'un système de positionnement par satellites (et donc qu'une synchronisation temporelle avec une horloge de référence commune n'est pas possible), l'horloge interne de l'entité peut être corrigée de manière fiable grâce à un message reçu en provenance d'une autre entité. A partir de la lecture d'un horodatage du message reçu, il est possible de déterminer un écart temporel entre l'horloge interne de l'entité et une autre horloge liée à l'autre entité, cet écart caractérisant une éventuelle dérive de l'horloge interne de l'entité considérée. L'horloge interne de l'entité considérée peut donc être corrigée sur la base de cet écart déterminé.

D'autres caractéristiques avantageuses et non limitatives du procédé conforme à l'invention, prises individuellement ou selon toutes les combinaisons techniquement possibles, sont les suivantes :

- si l'écart temporel est négatif, il est prévu de modifier l'heure définie par l'horloge interne de ladite entité, et
- si l'écart temporel est positif, il est prévu de maintenir l'heure définie par l'horloge interne de ladite entité ;
- la valeur déterminée dépend de la technologie de communication utilisée pour la transmission dudit message ;
- la valeur déterminée dépend du type du message ;
- la valeur déterminée dépend du niveau de sécurité dudit message ;
- la valeur déterminée dépend d'une durée d'encodage du message, laquelle durée étant préférentiellement déterminée par calcul d'une valeur moyenne de durées d'encodage associées à un nombre de messages reçus par ladite entité antérieurement à la réception dudit message ;
- la valeur déterminée dépend d'une durée de décodage du message, laquelle durée étant préférentiellement déterminée par calcul d'une valeur moyenne de durées de décodage associées à un nombre de messages reçus par ladite entité antérieurement à la réception dudit message ;

- il est également prévu une étape de correction de l'horloge interne de ladite entité sur la base de la correction temporelle déterminée ; et
- il est également prévu, si l'écart temporel est positif et supérieur à un seuil prédéterminé, une étape d'émission d'un message d'alerte concernant la fiabilité dudit message.

L'invention propose également un dispositif de correction de l'heure définie par une horloge interne d'une entité apte à recevoir des signaux d'un système de positionnement par satellites et à communiquer avec au moins une autre entité. Selon l'invention, ledit dispositif de correction comprend un calculateur programmé pour, lorsque les signaux ne permettent pas un positionnement par satellites de ladite entité :

- réceptionner un message en provenance de l'autre entité, ledit message comprenant une première donnée temporelle associée à l'instant d'émission dudit message,
- déterminer une deuxième donnée temporelle associée à l'instant de réception dudit message par ladite entité,
- calculer un écart temporel relatif à la différence entre la deuxième donnée temporelle et la première donnée temporelle, puis
- déterminer une correction temporelle à apporter à l'heure définie par l'horloge interne de ladite entité en fonction dudit écart temporel,

le calculateur étant en outre programmé pour :

- déterminer une deuxième donnée temporelle actualisée de manière à ce qu'un écart temporel théorique entre la deuxième donnée temporelle actualisée et la première donnée temporelle soit égal à une valeur déterminée, et
- déterminer la correction temporelle à partir de la deuxième donnée temporelle actualisée et de la deuxième donnée temporelle, afin de déterminer la correction temporelle à apporter à l'heure définie par l'horloge interne de ladite entité.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DETAILLEE DE L'INVENTION

La description qui va suivre en regard des dessins annexés, donnés à titre d'exemples non limitatifs, fera bien comprendre en quoi consiste l'invention et comment elle peut être réalisée.

Sur les dessins annexés :

La figure 1 représente schématiquement une entité équipée d'un dispositif de correction conforme à l'invention ;
La figure 2 représente schématiquement une situation d'échange de données dans laquelle le procédé conforme à l'invention peut être mis en oeuvre ; et
La figure 3 représente, sous forme de logigramme, un exemple de procédé de correction conforme à l'invention.

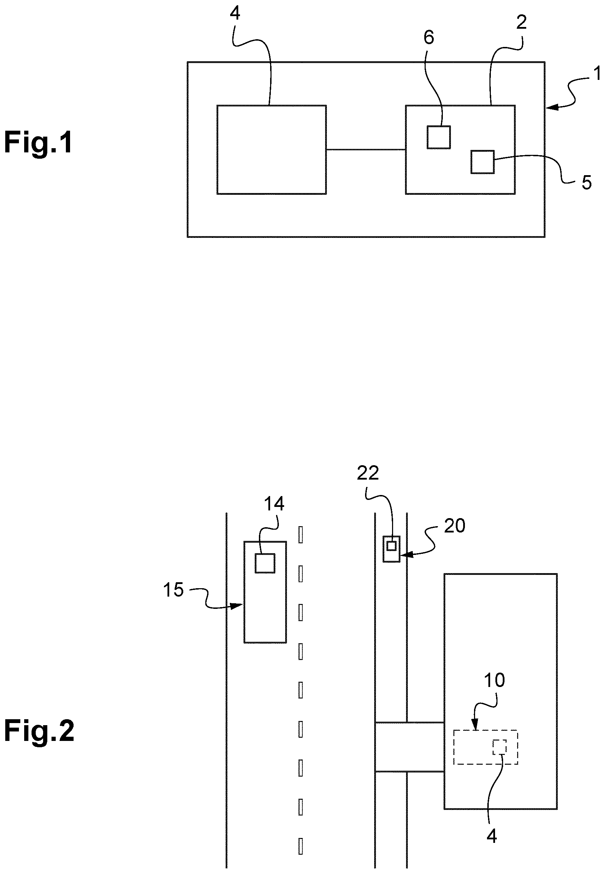

Sur la figure 1, on a représenté schématiquement une entité 1 équipée d'une horloge interne 4 et d'un dispositif de correction 2 de cette horloge interne 4.

Cette entité 1 est par exemple un véhicule, typiquement un véhicule automobile 10 tel que représenté sur la figure 2 ou un deux-roues ou encore un poids-lourd. L'entité 1 peut également être un élément électronique connecté porté par un piéton, comme par exemple un téléphone mobile.

Le dispositif de correction 2 comprend un calculateur 5 et une unité de communication 6.

Le calculateur 5 est programmé pour mettre en oeuvre les différentes étapes du procédé de correction décrit ci-après. Pour cela, le calculateur 5 comprend par exemple une mémoire et un processeur (non représentés) permettant de mémoriser et d'exécuter des instructions afin de mettre en oeuvre le procédé de correction.

L'unité de communication 6 permet à l'entité 1 de communiquer avec au moins une autre entité. Cette autre entité est distincte de l'entité 1. L'autre entité est par exemple un autre véhicule automobile 15 tel que représenté sur la figure 2. L'autre entité peut également être une infrastructure routière (équipée d'une autre unité de communication), typiquement un feu de circulation, une barrière, un tunnel ou un panneau d'affichage électronique positionné dans un rond-point ou en bordure de route.

L'unité de communication 6 est adaptée pour établir une connexion radiofréquence entre l'entité 1 et l'autre entité. Par exemple, dans le cas où l'entité 1 est un véhicule automobile, l'unité de communication 6 est adaptée pour établir des communications sans fil dites « V2X » (pour « *Vehicle-to-Everything* »), par exemple « V2V » (pour « *Vehicle-to-Vehicle »)* si l'autre entité est un autre véhicule automobile 15, « V2I » (pour « *Vehicle-to-Infrastructure* ») si l'autre entité est une infrastructure ou « V2P » (pour « *Vehicle-to-Pedestrian* ») si l'autre entité est portée par un piéton.

Différentes technologies peuvent être utilisées pour établir la communication radiofréquence. Par exemple, les communications dédiées à courte portée (ou DSRC pour « *Dedicated Short Range Communications* » selon l'acronyme d'origine anglo-saxonne couramment utilisé) peuvent être utilisées ici, reposant sur la norme IEEE 802.11p. La technologie PC5 mode 4 issue des technologies cellulaires et reposant sur le standard 3GPP version 14 peut également être utilisée dans le cadre de l'invention par exemple pour établir une communication radiofréquence entre véhicules sans passer par l'infrastructure cellulaire.

L'unité de communication 6 est ici conçue pour permettre l'échange de données entre l'entité 1 et l'autre entité. Ces données sont échangées sous forme de messages échangés entre l'entité 1 et l'autre entité, et inversement.

En considérant que l'entité 1 est le véhicule automobile 10, et dans le cadre des communications « V2X », différents types de messages peuvent être échangés.

Par exemple, les messages CAM (pour « *Cooperative Awareness* Message ») sont destinés à situer en temps réel, les véhicules et les infrastructures les uns par rapport aux autres. Les messages CAM comprennent donc des informations concernant la position et l'état des véhicules. Les messages CAM sont émis périodiquement par des entités présentes dans un système de transport intelligent et sont transmis et traités par toutes les entités qui sont à portées des entités émettrices.

Les messages DENM (pour « *Decentralized Environmental Notification* Messages ») sont des messages d'alerte destinés à être diffusés dans une zone géographique. Ils sont émis uniquement lors de la survenance d'un événement inopiné comme par exemple la présence d'un accident, de travaux sur les voies ou d'embouteillages. Ces messages ont donc un caractère prioritaire lors de leur transmission (par rapport à tous les autres types de messages) afin d'alerter immédiatement les différents protagonistes de la route sur la présence de l'événement identifié.

D'autres types de messages sont également échangés, tels que, de manière non exhaustive, des messages MAP transmettant des données géographiques, des messages SPAT (pour « *Signal Phase and Timing* ») transmettant des informations sur l'état actuel et les changements prochains des signaux routiers comme les feux de circulation ou des messages CPM (pour « Collective Perception Message ») comprenant des données issues des capteurs d'un véhicule automobile.

L'unité de communication 6 est également conçue pour permettre à l'entité 1 de recevoir des signaux d'un système de positionnement par satellites (dit « GNSS », tel que par exemple le système GPS), ces signaux comprennent par exemple des données concernant la position de l'entité 1. L'entité 1 est donc prévue pour être généralement localisée sous la couverture du système de positionnement par satellites.

Le système de positionnement par satellites comprend par exemple une horloge de référence, utilisée pour étalonner et régler l'horloge interne 4 de l'entité 1. L'horloge interne 4 est conçue pour mesurer le temps et définir l'heure dans l'entité 1.

Lorsque l'entité 1 est sous la couverture du système de positionnement par satellites et que les signaux transmis sont suffisants, ce système de positionnement transmet par exemple un message comprenant une donnée temporelle de référence permettant de régler l'heure de l'horloge interne 4 de l'entité 1. L'heure de l'horloge interne 4 de l'entité 1 est donc réglée à partir de la donnée temporelle de référence transmise.

De manière similaire, en considérant que l'autre entité est équipée d'une autre horloge interne, l'heure de cette autre horloge interne est également réglée à partir de la donnée temporelle de référence (lorsque l'autre entité se trouve sous la couverture du système de positionnement par satellites). En d'autres termes, cette donnée temporelle de référence permet le réglage des toutes les horloges internes des différentes entités. Cette donnée temporelle de référence constitue donc une référence absolue pour chaque horloge interne et permet donc la synchronisation temporelle de toutes les horloges internes.

En pratique, dans le cadre de l'échange de données avec d'autres entités, l'horloge interne 4 permet d'horodater les messages reçus et émis par l'entité 1.

L'invention propose une méthode permettant de caractériser de manière fiable l'horloge interne 4 de l'entité 1 lorsque les signaux ne permettent pas un positionnement par satellites de ladite entité 1. En pratique, cela signifie par exemple que l'entité 1 n'est pas sous la couverture du système de positionnement par satellites (et donc que la synchronisation temporelle de l'horloge interne 4 ne peut pas être assurée) ou que la qualité du signal du système de positionnement par satellites n'est pas suffisante.

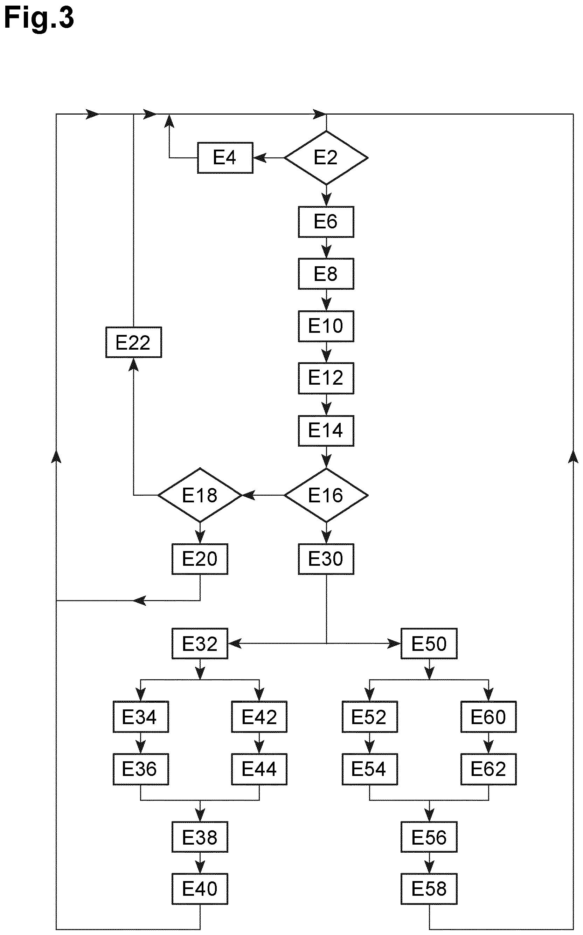

La figure 3 représente un exemple de réalisation du procédé de correction de l'horloge interne 4 de l'entité 1, illustré sous forme d'étapes. Ce procédé trouve une application avantageuse lorsque l'entité 1 est localisée en dehors de la couverture du système de positionnement par satellites.

Dans la suite de cette description, on considérera que l'entité 1 est un véhicule automobile 10 et que l'autre entité est un autre véhicule automobile 15 qui se trouve lui sous la couverture du système de positionnement par satellites (figure 2). Cependant, le présent procédé n'est pas limité à cette configuration et pourrait concerner tous types d'entités comprenant les caractéristiques décrites précédemment.

Comme cela est représenté sur la figure 3, le procédé commence à l'étape E2. Lors de cette étape, le calculateur détermine si le véhicule automobile 10 est sous la couverture du système de positionnement.

Si c'est le cas, la synchronisation temporelle est assurée, par exemple par la réception périodique de messages comprenant la donnée temporelle de référence. Cela permet en particulier d'actualiser l'horloge interne 4 du véhicule automobile 10.

Dans ce cas, le procédé se poursuit ensuite à l'étape E4 lors de laquelle, au fur et à mesure que le véhicule automobile 10 se déplace sur son trajet, le calculateur 5 génère et envoie de nouveaux messages à destination d'autres entités présentes à proximité du véhicule automobile 10.

Le procédé recommence ensuite à l'étape E2, afin d'être mis en oeuvre en boucle lorsque le véhicule automobile 10 se déplace.

Si à l'étape E2, le calculateur 5 détecte que le véhicule automobile 10 n'est pas sous la couverture du système de positionnement, le procédé se poursuit à l'étape E6. Cela correspond par exemple à la situation représentée sur la figure 2, dans laquelle le véhicule automobile 10 est stationné dans un endroit clos, comme un tunnel ou un parking souterrain, ne permettant pas la réception d'un signal en provenance du système de positionnement par satellites. Dans l'exemple de la figure 2, le véhicule automobile 10 est stationné dans un garage et le calculateur 5 met en oeuvre le procédé au démarrage du véhicule automobile 10.

Lors de l'étape E6, le calculateur 5 commande alors l'arrêt de l'émission de messages par le véhicule automobile 10 puisqu'a priori aucun horodatage fiable des messages ne peut être réalisé (car le véhicule automobile 10 n'est pas sous la couverture du système de positionnement par satellites). Il continue en revanche à recevoir des messages.

Ensuite, à l'étape E8, le calculateur 5 réceptionne un message. Ce message provient d'une autre entité présente à proximité du véhicule automobile 10. Ce message est transmis par l'intermédiaire d'une connexion radiofréquence, par exemple selon les standards DSRC 802.11p ou PC5 introduits précédemment.

Dans l'exemple de la figure 2, le message est par exemple transmis par l'autre véhicule automobile 15. En variante, le message peut être transmis à partir d'un terminal mobile 22 porté par un piéton 20 ou par une infrastructure adaptée à communiquer selon les standards DSRC ou PC5 introduits précédemment.

Lors de la réception du message, le calculateur 5 détermine l'instant de réception $T_r$ à partir de l'horloge interne 4 du véhicule automobile 10 (étape E10).

A l'étape E12, le calculateur 5 lit les informations stockées dans le message reçu. En particulier, le calculateur 5 détermine l'information concernant l'instant d'émission $T_e$ du message. L'horodatage lié à l'émission du message est effectué par l'horloge interne 14 de l'autre véhicule automobile 15, préalablement à l'étape E8 de réception. Comme l'autre véhicule 15 est en mesure d'émettre des messages (puisque l'un deux a été reçu par le véhicule automobile 10 à l'étape E8), cela signifie qu'il est sous la couverture du système de positionnement ou qu'il est capable de maintenir, avec une précision suffisante, une horloge interne synchrone avec l'horloge de référence, l'horodatage de l'émission du message est donc considéré comme fiable.

A l'étape E14, le calculateur 5 détermine un écart temporel $\Delta T$ entre l'instant de réception $T_r$ et l'instant d'émission du message $T_e$. Cet écart temporel est ici défini comme la différence entre l'instant de réception $T_r$ et l'instant d'émission du message $T_e$ : $\Delta T = T_r - T_e$. Cet écart temporel $\Delta T$ permet de détecter et d'évaluer un éventuel décalage entre l'horloge interne 4 du véhicule automobile 10 et l'horloge interne 14 de l'autre véhicule automobile 15 (pour laquelle, comme précisé précédemment, la synchronisation temporelle est assurée). En d'autres termes, l'écart temporel $\Delta T$ permet de mesurer une éventuelle dérive de l'horloge interne 4 du véhicule automobile 10 par rapport à une horloge de référence associée au système de positionnement par satellites.

Pour détecter une éventuelle dérive de l'horloge interne 4, le signe de l'écart temporel $\Delta T$ est considéré à l'étape E16.

Si l'écart temporel $\Delta T$ est positif, cela signifie que le message a été reçu après avoir été émis (ce qui est cohérent dans un processus d'échange de données). L'horloge interne 4 est donc considérée comme étant raisonnablement temporellement synchronisée (si une dérive de l'horloge interne 4 s'est produite, elle est considérée comme étant négligeable). L'horloge interne 4 de l'entité 1 est donc maintenue en l'état (aucun réglage n'est effectué dans ce cas).

Le procédé se poursuit alors à l'étape E18. Lors de cette étape, l'écart temporel $\Delta T$ est comparé à un seuil prédéterminé de fiabilité du message. Le seuil prédéterminé de fiabilité du message est par exemple de l'ordre de 200 ms. Si l'écart temporel $\Delta T$ est supérieur à ce seuil prédéterminé, cela signifie qu'une longue durée s'est écoulée entre l'instant d'émission $T_e$ et l'instant de réception $T_r$ du message. Des doutes concernant la fiabilité du message sont donc soulevés et le calculateur 5 émet donc un message d'alerte à ce sujet (étape E20). Cela intervient par exemple lorsque l'autre horloge interne 14 de l'autre véhicule automobile 15 n'est finalement pas convenablement temporellement synchronisée. Le message n'est donc pas mis en forme pour être transmis par exemple au conducteur du véhicule automobile 10. Le procédé reprend ensuite à l'étape E2.

Si l'écart temporel $\Delta T$ est positif mais inférieur au seuil prédéterminé, l'horloge interne 4 est considérée comme étant temporellement synchronisée et le message est considéré comme fiable (une durée normale s'est écoulée entre l'instant d'émission $T_e$ et l'instant de réception $T_r$ du message). Le calculateur 5 autorise à nouveau la génération et l'émission de messages par le véhicule automobile 10 (étape E22).

Si, à l'étape E16, l'écart temporel $\Delta T$ a été évalué comme étant négatif, cela signifie que le message est considéré comme ayant été reçu avant d'avoir été émis, ce qui n'est pas cohérent avec un processus classique de transmission de messages. Le calculateur 5 détecte donc une dérive de l'horloge interne 4 du véhicule automobile 10 qu'il va chercher à corriger dans la suite.

Comme cela est visible sur la figure 3, le procédé se poursuit à l'étape E30. Lors de cette étape, le calculateur 5 détermine le type de liaison radiofréquences qui a permis la transmission du message de l'autre véhicule automobile 15 au véhicule automobile 10.

Si la communication radiofréquence est de type DSRC, le procédé se poursuit à l'étape E32. A cette étape, le calculateur 5 identifie le type du message qui a été reçu à l'étape E8.

S'il s'agit d'un message de type DENM, le procédé se poursuit à l'étape E34.

Le calculateur 5 cherche alors à déterminer la correction temporelle à apporter à l'horloge interne 4 afin de compenser la dérive identifiée à l'étape E16. Pour cela, à l'étape E34, le calculateur 5 calcule un écart temporel théorique $\Delta T_{th\_DENM}$ attendu correspondant à une bonne synchronisation temporelle de l'horloge interne 4 et une transmission du message en une durée raisonnable.

Cet écart temporel théorique $\Delta T_{th\_DENM}$ se décompose sous la forme suivante :

$$\Delta T_{th\_DENM} = T_{enc\_DENM} + T_{dec\_DENM} + T_{radio\_DENM},$$

avec $T_{enc\_DENM}$, la durée nécessaire d'encodage du message avant sa transmission, $T_{dec\_DENM}$, la durée de décodage du message après sa transmission et $T_{radio\_DSRC\_DENM}$, la durée d'accès au canal radiofréquence de transmission (ici associé à la communication DSRC) et de transmission.

La durée d'encodage $T_{enc\_DENM}$ dépend du niveau de sécurité du message. Pour un niveau de sécurité donné du message, cette durée d'encodage est supposée égale à une valeur connue. Ici, pour déterminer la durée d'encodage $T_{enc\_DENM}$ associé à un message DENM reçu, le calculateur 5 calcule une valeur moyenne des durées d'encodage associées à un nombre N de messages DENM reçus par le véhicule automobile 10 antérieurement à l'étape E8. De manière préférentielle, la valeur moyenne est déterminée à partir des N derniers messages DENM reçus (N étant un entier supérieur ou égal à deux). Le calcul de cette valeur moyenne est effectué à partir de messages ayant le même niveau de sécurité que celui reçu à l'étape E8.

La durée de décodage $T_{dec\_DENM}$ dépend également du niveau de sécurité du message. Pour un niveau de sécurité donné du message, cette durée de décodage est supposée égale à une valeur connue. Ici, pour déterminer la durée de décodage $T_{dec\_DENM}$ associé à un message DENM reçu, le calculateur 5 calcule une valeur moyenne des durées de décodage associées à un nombre N de messages DENM reçus par le véhicule automobile 10 antérieurement à l'étape E8. De manière préférentielle, la valeur moyenne est déterminée à partir des N derniers messages DENM reçus. De la même façon que pour l'estimation de la durée d'encodage $T_{enc\_DENM}$, le calcul de cette valeur moyenne est effectué à partir de messages ayant le même niveau de sécurité que celui reçu à l'étape E8.

La durée d'accès au canal radiofréquence de transmission et de transmission $T_{radio\_DSRC\_DENM}$ (également appelée durée de communication radiofréquence $T_{radio\_DSRC\_DENM}$ dans la suite) comprend quant à elle deux composantes : une première associée à la durée nécessaire pour accéder au canal radiofréquence $T_{acc\_DENM}$ et une deuxième associée à une durée de transmission $T_{trans\_DENM}$.

La durée de transmission $T_{trans\_DENM}$ est estimée à partir de la taille moyenne d'un message DENM notée $S_{moy\_DENM}$, déterminée par exemple en considérant les N derniers messages DENM reçus, et de la vitesse de transmission d'un message DENM $v_{DENM}$. Ici, la vitesse de transmission d'un message DENM $v_{DENM}$ est typiquement de l'ordre de 6 Mbit/s. Ainsi, la durée de transmission $T_{trans\_DENM}$ est égale à :

$$T_{trans\_DENM} = S_{moy\_DENM}/v_{DENM}.$$

La durée nécessaire pour accéder au canal radiofréquence $T_{acc\_DENM}$ dépend quant à elle d'une durée associée à la détection de l'aspect prioritaire du message $T_{LBT\_DENM}$ (LBT pour « *Listen-Before-Talk* »), d'une durée écoulée entre deux transmissions de données $T_{AIFS\_DENM}$ (AIFS pour « *Arbitration inter-frame space* ») pour ce type de message et d'une durée $T_{CW\_DENM}$ (CW pour « *Contention Window* ») qualifiant la période temporelle pendant laquelle un canal de communication est capable de traiter des demandes arrivant simultanément avant d'être en état de sur-sollicitation.

Ici, comme précisé précédemment, les messages DENM sont transmis en priorité par rapport aux autres types de messages. La durée associée à la détection de l'aspect prioritaire du message $T_{LBT\_DENM}$ va donc uniquement dépendre de la présence d'autres messages DENM à transmettre. Cependant, comme la survenue de messages DENM est peu fréquente, la durée associée à la détection de l'aspect prioritaire du message $T_{LBT\_DENM}$ est négligeable pour un message DENM. Ici, la durée $T_{LBT\_DENM}$ est donc considérée comme nulle.

Par convention, la durée écoulée entre deux transmissions de données $T_{AIFS\_DENM}$ est égale à une valeur prédéterminée, typiquement ici de l'ordre de 58 μs. Enfin, la durée $T_{CW\_DENM}$ est déterminée de manière aléatoire dans un intervalle prédéterminé. Cet intervalle s'étend par exemple entre 0 et 39 μs.

Finalement ici, la durée nécessaire pour accéder au canal radiofréquence $T_{acc\_DENM}$, égale à $T_{acc\_DENM} = T_{LBT\_DENM} + T_{AIFS\_DENM} + T_{CW\_DENM}$, est comprise entre 58 et 97 μs. Dans le cas d'un message reçu de type DENM, le calculateur 5 la fixe à une valeur arbitraire, typiquement de l'ordre de 0,1 ms.

Ainsi, l'écart temporel théorique est égal à :

$$\Delta T_{th\_DENM} = T_{enc\_DENM} + T_{dec\_DENM} + T_{radio\_DSRC\_DENM}$$

$$= T_{enc\_DENM} + T_{dec\_DENM} + T_{acc\_DENM} + T_{trans\_DENM}$$

$$= T_{enc\_DENM} + T_{dec\_DENM} + T_{LBT\_DENM} + T_{AIFS\_DENM} + T_{CW\_DENM} + S_{moy\_DENM}/v_{DENM}.$$

Cette détermination de l'écart temporel théorique attendu dans le cas d'une bonne synchronisation temporelle de l'horloge interne 4 permet de déduire un instant de réception attendu $T_{ra}$ du message reçu (correspondant à l'instant de réception déterminé si l'horloge interne 4 avait été convenablement synchronisée), à savoir

$$T_{ra} - T_e = \Delta T_{th\_DENM}.$$

A l'étape E36, la correction temporelle $\varepsilon_T$ à apporter à l'horloge interne 4 est donc déterminée à partir de l'instant de réception $T_r$ du message reçu (déterminé à l'étape E10) et de l'instant de réception attendu $T_{ra}$ (déterminé à l'étape E34). Cette correction temporelle $\varepsilon_T$ est définie comme la différence entre l'instant de réception $T_r$ et l'instant de réception attendu $T_{ra}$ : $\varepsilon_T = T_r - T_{ra}$.

A l'étape E38, le calculateur 5 corrige l'heure définie par l'horloge interne 4 du véhicule automobile 10 à partir de la correction temporelle $\varepsilon_T$ déterminée. A l'issue de cette étape E38, l'horloge interne 4 est considérée comme étant à nouveau temporellement synchronisée. Des messages sont à nouveau émis par le véhicule automobile 10 à l'étape E40.

Le procédé reprend ensuite à l'étape E2, tout au long du déplacement du véhicule automobile 10.

Si à l'étape E32, un message de type CAM a été identifié, le procédé se poursuit à l'étape E42.

De manière similaire à l'étape E34 décrite pour un message de type DENM, le calculateur 5 détermine, ici dans le cas d'un message de type CAM, la correction temporelle à apporter à l'horloge interne 4 afin de compenser la dérive identifiée à l'étape E16. Pour cela, le calculateur 5 calcule un écart temporel théorique $\Delta T_{th\_CAM}$ attendu correspondant à une bonne synchronisation temporelle de l'horloge interne 4 et une transmission du message en une durée raisonnable.

Cet écart temporel théorique $\Delta T_{th\_CAM}$ se décompose sous la forme introduite précédemment : $\Delta T_{th\_CAM} = T_{enc\_CAM} + T_{dec\_CAM} + T_{radio\_DSRC\_CAM}$.

La durée de décodage $T_{dec\_CAM}$ est définie de manière similaire au cas correspondant au message de type DENM. La durée de décodage $T_{dec\_CAM}$ dépend du niveau de sécurité du message. Pour un niveau de sécurité donné du message, cette durée de décodage est supposée égale à une valeur connue. Ici, pour déterminer la durée de décodage $T_{dec\_CAM}$ associé à un message CAM reçu, le calculateur 5 calcule une valeur moyenne des durées de décodage associées à un nombre N' de messages CAM reçus par le véhicule automobile 10 antérieurement à l'étape E8. De manière préférentielle, la valeur moyenne est déterminée à partir des N' derniers messages CAM reçus (N' étant un entier naturel supérieur ou égal à 2). Le calcul de cette valeur moyenne est effectué à partir de messages ayant le même niveau de sécurité que celui reçu à l'étape E8.

La durée d'encodage $T_{enc\_CAM}$ dépend également du niveau de sécurité du message. Pour un niveau de sécurité donné du message, cette durée d'encodage est supposée égale à une valeur connue. Ici, pour déterminer la durée d'encodage $T_{enc\_CAM}$ associé à un message CAM reçu, le calculateur 5 calcule une valeur moyenne des durées d'encodage associées à un nombre N' de messages CAM reçus par le véhicule automobile 10 antérieurement à l'étape E8 et prend également en compte une durée moyenne d'injection $T_{inj}$ des messages CAM (traduisant le fait que, comme indiqué précédemment, les messages de type CAM sont transmis périodiquement). De manière préférentielle, la valeur moyenne est déterminée à partir des N' derniers messages CAM reçus. Le calcul de cette valeur moyenne est effectué à partir de messages ayant le même niveau de sécurité que celui reçu à l'étape E8. La durée moyenne d'injection $T_{inj}$ des messages CAM dépend quant à elle d'un intervalle de transmission $T_{int\_trans}$ de messages de type CAM, dépendant lui-même de la vitesse du véhicule automobile 10. Ici cette durée moyenne d'injection Tinj est égale à Tinj = Tint_trans/2.

Comme pour les messages de type DENM, la durée de communication radiofréquence $T_{radio\_DSRC\_CAM}$ comprend les deux composantes : la première associée à la durée nécessaire pour accéder au canal radiofréquence $T_{acc\_CAM}$ et la deuxième associée à une durée de transmission $T_{trans\_CAM}$.

La durée de transmission $T_{trans\_CAM}$ est estimée à partir de la taille moyenne d'un message de type CAM notée $S_{moy\_CAM}$, déterminée par exemple en considérant les N' derniers messages de type CAM reçus, et de la vitesse de transmission d'un message CAM $v_{CAM}$. Ici, la vitesse de transmission d'un message CAM $v_{CAM}$ est typiquement de l'ordre de 6 Mbit/s. Ainsi, la durée de transmission $T_{trans\_CAM}$ est égale à :

$$T_{trans\_CAM} = S_{moy\_CAM} / v_{CAM}.$$

La durée nécessaire pour accéder au canal radiofréquence $T_{acc\_CAM}$ comprend les composantes décrites précédemment, à savoir une durée $T_{LBT\_CAM}$ durant laquelle le canal radiofréquence est inaccessible car occupé par les transmissions de messages CAM d'autres entités, une durée écoulée entre deux transmissions de données $T_{AIFS\_CAM}$ et une durée $T_{CW\_CAM}$ qualifiant la période temporelle pendant laquelle un canal de communication est capable de traiter des demandes arrivant simultanément avant d'être en état de sur-sollicitation.

Ici, la durée $T_{LBT\_CAM}$ associée à la détection de la disponibilité du canal radiofréquence est modélisée en évaluant une durée moyenne $T_{moy\_CAM}$ des messages de type CAM des autres entités et une probabilité $P_{trans\_CAM}$ de transmission en cours d'un message de type CAM selon la formule suivante :

$$T_{LBT\_CAM} = T_{moy\_CAM} * P_{trans\_CAM}.$$

En pratique, la durée moyenne $T_{moy\_CAM}$ est estimée à partir de la taille cumulée

$S_{tot\_CAM}$ des messages CAM sur une fenêtre d'observation, de la vitesse de transmission d'un message CAM $v_{CAM}$ (typiquement de l'ordre de 6 Mbits/s) et du nombre de messages CAM $N_{CAM}$ recensés sur cette fenêtre d'observation. Ainsi la durée moyenne $T_{moy\_CAM}$ s'écrit sous la forme : $T_{moy\_CAM} = (S_{tot\_CAM} / v_{CAM}) / N_{CAM}$. La probabilité $P_{trans\_CAM}$ de transmission est donnée comme le rapport entre la durée moyenne $T_{moy\_CAM}$ et la taille (en secondes) de la fenêtre d'observation.

Par convention, pour des messages de type CAM, la durée écoulée entre deux transmissions de données $T_{AIFS\_CAM}$ est égale à une valeur prédéterminée, typiquement ici de l'ordre de 110 μs. Enfin, la durée $T_{CW\_CAM}$ est déterminée de manière aléatoire dans un intervalle prédéterminé. Cet intervalle s'étend par exemple ici entre 0 et 195 μs.

Finalement ici, dans le cas d'un message reçu de type CAM, le calculateur 5 fixe à une valeur arbitraire la somme des durées $T_{AIFS\_CAM} + T_{CW\_CAM}$. Cette valeur arbitraire est typiquement de l'ordre de 0,2 ms.

Ainsi, l'écart temporel théorique peut être calculé ainsi :

$$\Delta T_{th\_CAM} = T_{enc\_CAM} + T_{dec\_CAM} + T_{radio\_DSRC\_CAM}$$

$$= T_{enc\_CAM} + T_{dec\_CAM} + T_{acc\_CAM} + T_{trans\_CAM}$$

$$= T_{enc\_CAM} + T_{dec\_CAM} + T_{LBT\_CAM} + T_{AIFS\_CAM} + T_{CW\_CAM} + S_{moy\_CAM}/V_{CAM}$$

avec chaque terme tel que défini précédemment.

Comme dans le cas des messages de type DENM, cette détermination de l'écart temporel théorique attendu dans le cas d'une bonne synchronisation temporelle de l'horloge interne 4 permet de déduire un l'instant de réception attendu $T_{ra}$ du message reçu (correspondant à l'instant de réception déterminé si l'horloge interne 4 avait été convenablement synchronisée).

A l'étape E44 (similaire à l'étape E36 décrite précédemment), la correction temporelle $\varepsilon_T$ à apporter à l'heure définie par l'horloge interne 4 est donc déterminée à partir de l'instant de réception $T_r$ du message reçu (déterminé à l'étape E10) et de l'instant de réception attendu $T_{ra}$ (déterminé à l'étape E42). Cette correction temporelle $\varepsilon_T$ est définie comme la différence entre l'instant de réception $T_r$ et l'instant de réception attendu $T_{ra}$ : $\varepsilon_T = T_r - T_{ra}$. Le procédé se poursuit ensuite avec l'étape E38 décrite précédemment.

Si, à l'étape E30, il est détecté que la communication radiofréquence est de type PC5, le procédé se poursuit à l'étape E50. Comme dans le cas de la communication radiofréquence de type DSRC décrit précédemment, à l'étape E50 (similaire à l'étape E32), le calculateur 5 identifie le type du message qui a été reçu à l'étape E8.

S'il s'agit d'un message de type DENM, le procédé se poursuit à l'étape E52.

Le calculateur 5 cherche à déterminer la correction temporelle à apporter à l'horloge interne 4 afin de compenser la dérive identifiée à l'étape E16. Pour cela, lors de l'étape E52, le calculateur 5 calcule l'écart temporel théorique $\Delta T_{th\_DENM}$ attendu correspondant à une bonne synchronisation temporelle de l'horloge interne 4 et une transmission du message en une durée raisonnable.

Par rapport au cas de la communication radiofréquence de type DSRC, seule la durée d'accès au canal radiofréquence de transmission (ici associé à la communication PC5) et de transmission $T_{radio\_PC5\_DENM}$ change dans le calcul de l'écart temporel théorique $\Delta T_{th\_DENM}$. La détermination des autres termes n'est donc pas décrite à nouveau ici.

Lors d'une communication radiofréquence de type PC5, la transmission d'un message s'effectue dans une fenêtre temporelle déterminée. Cette fenêtre temporelle déterminée est par exemple de la forme $[4 ; T_{max\_trans\_DENM}]$ exprimée en millisecondes.

En pratique, la taille de la fenêtre temporelle déterminée dépend du type de message reçu. Elle peut également dépendre d'un taux d'occupation du canal de communication CBR (pour « *Channel Busy Ratio* »). Plus le taux d'occupation est élevé, plus la fenêtre temporelle sera étendue (afin de réduire le risque de collision issu du fait que deux entités différentes sélectionneraient le même canal de communication pour transmettre leurs message respectifs).

Dans le cadre de l'invention, la valeur maximale $T_{max\_trans\_DENM}$ de la fenêtre temporelle est déterminée à partir d'une fonction $f_{DENM}(CBR)$ associée au type de message (ici DENM) et dépendant du taux d'occupation du canal de communication CBR. Pour un faible taux d'occupation du canal de communication CBR, cette fonction $f_{DENM}(CBR)$ est par exemple constante, typiquement de l'ordre de 20 ms. Pour un taux d'occupation du canal de communication CBR élevé, la fonction $f_{DENM}(CBR)$ est par exemple constante, typiquement de l'ordre de 100 ms.

Ainsi, afin de déterminer la durée d'accès au canal radiofréquence de transmission et de transmission $T_{radio\_PC5\_DENM}$, le calculateur 5 lit à l'étape E52 le taux d'occupation du canal de communication CBR puis en déduit la valeur maximale $T_{max\_trans\_DENM}$ de la fenêtre temporelle. La durée d'accès au canal radiofréquence de transmission et de transmission $T_{radio\_PC5\_DENM}$ est alors définie comme étant le milieu de cette fenêtre temporelle : $T_{radio\_PC5\_DENM} = (4 + f_{DENM}(CBR))/2$.

Le calculateur 5 détermine ensuite l'écart temporel théorique $\Delta T_{th\_DENM}$, puis l'instant de réception attendu $T_{ra}$ selon le méthode décrite à l'étape E36. Le procédé se poursuit ensuite avec les étapes E54 à E58 qui sont similaires aux étapes E36 à E40 décrites précédemment.

Si, à l'étape E50, un message de type CAM a été identifié, le procédé se poursuit à l'étape E60.

Le calculateur 5 cherche encore ici à déterminer la correction temporelle à apporter à l'horloge interne 4 afin de compenser la dérive identifiée à l'étape E16. Pour cela, lors de l'étape E60, le calculateur 5 calcule l'écart temporel théorique $\Delta T_{th\_CAM}$ attendu correspondant à une bonne synchronisation temporelle de l'horloge interne 4 et une transmission du message en une durée raisonnable.

Par rapport au cas de la communication radiofréquence de type DSRC (et comme précisé pour les messages de type DENM), seule la durée d'accès au canal radiofréquence de transmission (ici associé à la communication PC5) et de transmission

$T_{radio\_PC5\_CAM}$ change dans le calcul de l'écart temporel théorique $\Delta T_{th\_CAM}$. La détermination des autres termes n'est donc pas décrite à nouveau ici.

Comme pour le cas des messages de type DENM, lors d'une communication radiofréquence de type PC5, la transmission d'un message s'effectue dans une fenêtre temporelle déterminée. Cette fenêtre temporelle déterminée est par exemple de la forme $[4 ; T_{max\_trans\_CAM}]$.

Dans le cadre de l'invention, la valeur maximale $T_{max\_trans\_CAM}$ de la fenêtre temporelle est déterminée à partir d'une fonction $f_{CAM}(CBR)$ associée au type de message (ici CAM) et dépendant du taux d'occupation du canal de communication CBR. Pour un faible taux d'occupation du canal de communication CBR, cette fonction $f_{CAM}(CBR)$ est par exemple constante, typiquement de l'ordre de 20 ms. Pour un taux d'occupation du canal de communication CBR élevé, la fonction $f_{CAM}(CBR)$ est par exemple constante, typiquement de l'ordre de 100 ms.

Ainsi, afin de déterminer la durée d'accès au canal radiofréquence de transmission et de transmission $T_{radio\_PC5\_CAM}$, le calculateur 5 lit à l'étape E60 le taux d'occupation du canal de communication CBR puis en déduit la valeur maximale $T_{max\_trans\_CAM}$ de la fenêtre temporelle. La durée d'accès au canal radiofréquence de transmission et de transmission $T_{radio\_PC5\_CANM}$ est alors définie comme étant le milieu de cette fenêtre temporelle : $T_{radio\_PC5\_CAM} = (4 + f_{CAM}(CBR))/2$.

Le calculateur 5 détermine ensuite l'écart temporel théorique $\Delta T_{th\_CAM}$, puis l'instant de réception attendu $T_{ra}$ selon la méthode décrite à l'étape E42. Le procédé se poursuit ensuite avec les étapes E62, E56 et E58 qui sont respectivement similaires aux étapes E44, E38 et E40 décrites précédemment.

La présente invention n'est nullement limitée aux modes de réalisation décrits et représentés, mais l'homme du métier saura y apporter toute variante conforme à l'invention.

Lorsque la valeur déterminée dépend du niveau de sécurité dudit message, elle dépend plus précisément du temps d'encodage qui est lié au niveau de sécurité dudit message.

Dans les cas où plusieurs autres entités communiquent simultanément avec l'entité 1, tous les messages communiqués sont reçus, sans besoin de questionner les autres entités, ni de choisir une seule autre entité. On sélectionne alors la latence minimale négative, c'est à dire l'écart temporel $\Delta T$ minimal négatif, parmi toutes celles des messages reçus, ce qui permet de corriger l'horloge interne avec le plus grand écart temporel.

L'invention permet de ne pas ajouter de message supplémentaire mais d'utiliser la charge utile du protocole de couche supérieure existante qui contient une référence de synchronisation complètement indépendante de l'implémentation de la couche physique. Ce qui permet d'utiliser un horodatage qui n'est pas lié à la technologie de transmission de la couche physique mais qui est à l'intérieur de la charge utile du message puisque le message comprend dans sa charge utile une première donnée temporelle $T_e$ associée à l'instant d'émission du message. Un autre avantage est donc de prendre en compte le délai exact de transmission dans le recalage de l'horloge interne, grâce à la connaissance de l'instant d'émission $T_e$ et de réception $T_r$.

**Revendications**

1. Procédé de correction de l'heure définie par une horloge interne (4) d'une entité (1) apte à recevoir des signaux d'un système de positionnement par satellites et à communiquer avec au moins une autre entité, ledit procédé, lorsque les signaux ne permettent pas un positionnement par satellites de ladite entité (1), comprenant des étapes de :

   - réception, par ladite entité (1), d'un message en provenance de ladite autre entité, ledit message comprenant une première donnée temporelle $T_e$ associée à l'instant d'émission dudit message,
   - détermination, par ladite entité (1), d'une deuxième donnée temporelle $T_r$ associée à l'instant de réception dudit message par ladite entité,
   - calcul d'un écart temporel $\Delta T$ relatif à la différence entre la deuxième donnée temporelle $T_r$ et la première donnée temporelle $T_e$, puis
   - détermination d'une correction temporelle $\varepsilon_T$ à apporter à l'heure définie par l'horloge interne (4) de ladite entité (1) en fonction dudit écart temporel $\Delta T$, le procédé **caractérise en ce que** U
   l'étape de détermination d'une correction temporelle $\varepsilon_T$ comprend les sous-étapes de :

      - détermination d'une deuxième donnée temporelle actualisée $T_{ra}$ de manière à ce qu'un écart temporel théorique, $\Delta T_{th\_DENM}$, $\Delta T_{th\_CAM}$, entre la deuxième donnée temporelle actualisée $T_{ra}$ et la première donnée temporelle $T_e$ soit égal à une valeur déterminée, et
      - détermination de la correction temporelle $\varepsilon_T$ à partir de la deuxième donnée temporelle actualisé $T_{ra}$ et de la deuxième donnée temporelle $T_r$.

2. Procédé selon la revendication 1, dans lequel :

- si l'écart temporel $\Delta T$ est négatif, il est prévu de modifier l'heure définie par l'horloge interne (4) de ladite entité (1), et
- si l'écart temporel $\Delta T$ est positif, il est prévu de maintenir l'heure définie par l'horloge interne (4) de ladite entité (1).

**3.** Procédé selon la revendication 1 ou 2, dans lequel la valeur déterminée dépend de la technologie de communication utilisée pour la transmission dudit message.

**4.** Procédé selon l'une quelconque des revendications 1 à 3, dans lequel la valeur déterminée dépend du type du message.

**5.** Procédé selon l'une quelconque des revendications 1 à 4, dans lequel la valeur déterminée dépend du niveau de sécurité dudit message.

**6.** Procédé selon l'une quelconque des revendications 1 à 5, dans lequel la valeur déterminée dépend d'une durée d'encodage, $T_{enc\_DENM}$, $T_{enc\_CAM}$, du message, laquelle durée, $T_{enc\_DENM}$, $T_{enc\_CAM}$, étant préférentiellement déterminée par calcul d'une valeur moyenne de durées d'encodage associées à un nombre, N, N', de messages reçus par ladite entité (1) antérieurement à la réception dudit message.

**7.** Procédé selon l'une quelconque des revendications 1 à 6, dans lequel la valeur déterminée dépend d'une durée de décodage, $T_{enc\_DENM}$, $T_{enc\_CAM}$, du message, laquelle durée, $T_{enc\_DENM}$, $T_{enc\_CAM}$, étant préférentiellement déterminée par calcul d'une valeur moyenne de durées de décodage associées à un nombre, N, N', de messages reçus par ladite entité (1) antérieurement à la réception dudit message.

**8.** Procédé selon l'une quelconque des revendications 1 à 7, dans lequel il est également prévu une étape de correction de l'horloge interne (4) de ladite entité (1) sur la base de la correction temporelle $\varepsilon_T$ déterminée.

**9.** Procédé selon l'une quelconque des revendications 1 à 8, dans lequel il est également prévu, si l'écart temporel $\Delta T$ est positif et supérieur à un seuil prédéterminé, une étape d'émission d'un message d'alerte concernant la fiabilité dudit message.

**10.** Dispositif de correction (2) de l'heure définie par une horloge interne (4) d'une entité (1) apte à recevoir des signaux d'un système de positionnement par satellites et à communiquer avec au moins une autre entité, ledit dispositif de correction (2) comprenant un calculateur (5) programmé pour, lorsque les signaux ne permettent pas un positionnement par satellites de ladite entité (1) :

- réceptionner un message en provenance de l'autre entité, ledit message comprenant une première donnée temporelle $T_e$ associée à l'instant d'émission dudit message,
- déterminer une deuxième donnée temporelle $T_r$ associée à l'instant de réception dudit message par ladite entité (1),
- calculer un écart temporel $\Delta T$ relatif à la différence entre la deuxième donnée temporelle $T_r$ et la première donnée temporelle $T_e$, puis
- déterminer une correction temporelle $\varepsilon_T$ à apporter à l'heure définie par l'horloge interne (4) de ladite entité (1) en fonction dudit écart temporel $\Delta T$, le dispositif **caractérise en ce que** le calculateur (5) est en outre programmé pour :

- déterminer une deuxième donnée temporelle actualisée $T_{ra}$ de manière à ce qu'un écart temporel théorique, $\Delta T_{th\_DENM}$, $\Delta T_{th\_CAM}$, entre la deuxième donnée temporelle actualisée $T_{ra}$ et la première donnée temporelle $T_e$ soit égal à une valeur déterminée, et
- déterminer la correction temporelle ($\varepsilon_T$) à partir de la deuxième donnée temporelle actualisée $T_{ra}$ et de la deuxième donnée temporelle $T_r$, afin de déterminer la correction temporelle $\varepsilon_T$ à apporter à l'heure définie par l'horloge interne (4) de ladite entité.

**Patentansprüche**

**1.** Verfahren zur Korrektur der durch einen internen Zeitgeber (4) einer Entität (1) definierten Uhrzeit, die Signale von einem satellitengestützten Positionsbestimmungssystem empfangen und mit mindestens einer anderen Entität kommunizieren kann, wobei das Verfahren, wenn die Signale keine satellitengestützte Positionsbestimmung der Entität (1) erlauben, Schritte enthält:

- des Empfangs, durch die Entität (1), einer Nachricht von der anderen Entität, wobei die Nachricht eine erste zeitliche Angabe $T_e$ enthält, die dem Sendezeitpunkt der Nachricht zugeordnet ist,
- der Bestimmung, durch die Entität (1), einer zweiten zeitlichen Angabe $T_r$, die dem Empfangszeitpunkt der Nachricht durch die Entität zugeordnet ist,
- der Berechnung einer zeitlichen Abweichung $\Delta T$ bezüglich der Differenz zwischen der zweiten zeitlichen Angabe $T_r$ und der ersten zeitlichen Angabe $T_e$, dann
- der Bestimmung einer an der vom internen Zeitgeber (4) der Entität (1) definierten Uhrzeit vorzunehmenden Zeitkorrektur $\varepsilon_T$ abhängig von der zeitlichen Abweichung $\Delta T$,

wobei das Verfahren **dadurch gekennzeichnet ist, dass** der Schritt der Bestimmung einer Zeitkorrektur $\varepsilon_T$ die Teilschritte enthält:

- der Bestimmung einer aktualisierten zweiten zeitlichen Angabe $T_{ra}$, so dass eine theoretische zeitliche Abweichung $\Delta T_{th\_DENM}$, $\Delta T_{th\_CAM}$ zwischen der aktualisierten zweiten zeitlichen Angabe $T_{ra}$ und der ersten zeitlichen Angabe $T_e$ gleich einem bestimmten Wert ist, und
- der Bestimmung der Zeitkorrektur $\varepsilon_T$ ausgehend von der aktualisierten zweiten zeitlichen Angabe $T_{ra}$ und von der zweiten zeitlichen Angabe $T_r$.

2. Verfahren nach Anspruch 1, wobei:

- wenn die zeitliche Abweichung $\Delta T$ negativ ist, vorgesehen ist, die vom internen Zeitgeber (4) der Entität (1) definierte Uhrzeit zu ändern, und
- wenn die zeitliche Abweichung $\Delta T$ positiv ist, vorgesehen ist, die vom internen Zeitgeber (4) der Entität (1) definierte Uhrzeit beizubehalten.

3. Verfahren nach Anspruch 1 oder 2, wobei der bestimmte Wert von der für die Übertragung der Nachricht verwendeten Kommunikationstechnik abhängt.

4. Verfahren nach einem der Ansprüche 1 bis 3, wobei der bestimmte Wert vom Typ der Nachricht abhängt.

5. Verfahren nach einem der Ansprüche 1 bis 4, wobei der bestimmte Wert vom Sicherheitsgrad der Nachricht abhängt.

6. Verfahren nach einem der Ansprüche 1 bis 5, wobei der bestimmte Wert von einer Codierdauer $T_{enc\_DENM}$, $T_{enc\_CAM}$ der Nachricht abhängt, wobei die Dauer $T_{enc\_DENM}$, $T_{enc\_CAM}$ vorzugsweise durch Berechnung eines Mittelwerts von Codierdauern bestimmt wird, die einer Anzahl N, N' von Nachrichten zugeordnet sind, die von der Entität (1) vor dem Empfang der Nachricht empfangen werden.

7. Verfahren nach einem der Ansprüche 1 bis 6, wobei der bestimmte Wert von einer Decodierdauer $T_{enc\_DENM}$, $T_{enc\_CAM}$ der Nachricht abhängt, wobei die Dauer $T_{enc\_DENM}$, $T_{enc\_CAM}$ vorzugsweise durch Berechnung eines Mittelwerts von Decodierdauern bestimmt wird, die einer Anzahl N, N' von Nachrichten zugeordnet sind, die von der Entität (1) vor dem Empfang der Nachricht empfangen werden.

8. Verfahren nach einem der Ansprüche 1 bis 7, wobei ebenfalls ein Korrekturschritt des internen Zeitgebers (4) der Entität (1) auf der Basis der bestimmten Zeitkorrektur $\varepsilon_T$ vorgesehen ist.

9. Verfahren nach einem der Ansprüche 1 bis 8, wobei ebenfalls, wenn die zeitliche Abweichung $\Delta T$ positiv und größer als eine vorbestimmte Schwelle ist, ein Schritt des Sendens einer Warnmeldung betreffend die Zuverlässigkeit der Nachricht vorgesehen ist.

10. Korrekturvorrichtung (2) der durch einen internen Zeitgeber (4) einer Entität (1) definierten Uhrzeit, die fähig ist, Signale von einem satellitengestützten Positionsbestimmungssystem zu empfangen und mit mindestens einer anderen Entität zu kommunizieren, wobei die Korrekturvorrichtung (2) einen Rechner (5) enthält, der, wenn die Signale keine satellitengestützte Positionsbestimmung der Entität (1) erlauben, programmiert ist:

- eine Nachricht von der anderen Entität zu empfangen, wobei die Nachricht eine erste zeitliche Angabe $T_e$

enthält, die dem Sendezeitpunkt der Nachricht zugeordnet ist,
- eine zweite zeitliche Angabe $T_r$ zu bestimmen, die dem Empfangszeitpunkt der Nachricht durch die Entität (1) zugeordnet ist,
- eine zeitliche Abweichung $\Delta T$ bezüglich der Differenz zwischen der zweiten zeitlichen Angabe $T_r$ und der ersten zeitlichen Angabe $T_e$ zu berechnen, dann
- eine an der vom internen Zeitgeber (4) der Entität (1) definierten Uhrzeit vorzunehmende Zeitkorrektur $\varepsilon_T$ abhängig von der zeitlichen Abweichung $\Delta T$ zu bestimmen, wobei die Vorrichtung **dadurch gekennzeichnet ist, dass** der Rechner (5) außerdem programmiert ist:

> - eine aktualisierte zweite zeitliche Angabe $T_{ra}$ zu bestimmen, so dass eine theoretische zeitliche Abweichung $\Delta T_{th\_DENM}$, $\Delta T_{th\_CAM}$ zwischen der aktualisierten zweiten zeitlichen Angabe $T_{ra}$ und der ersten zeitlichen Angabe $T_e$ gleich einem bestimmten Wert ist, und
> - die Zeitkorrektur ($\varepsilon_T$) ausgehend von der aktualisierten zweiten zeitlichen Angabe $T_{ra}$ und von der zweiten zeitlichen Angabe $T_r$ zu bestimmen, um die an der vom internen Zeitgeber (4) der Entität definierten Uhrzeit vorzunehmende Zeitkorrektur $\varepsilon_T$ zu bestimmen.

**Claims**

1. Method for correcting the time defined by an internal clock (4) of an entity (1) able to receive signals from a satellite positioning system and to communicate with at least one other entity, said method, when the signals do not allow satellite positioning of said entity (1), comprising the following steps:

   - said entity (1) receiving a message from said other entity, said message comprising a first item of time data $T_e$ associated with the transmission time of said message,
   - said entity (1) determining a second item of time data $T_r$ associated with the time of reception of said message by said entity,
   - computing a time difference $\Delta T$ relating to the difference between the second item of time data $T_r$ and the first item of time data $T_e$, and then
   - determining a temporal correction $\varepsilon_T$ to be made to the time defined by the internal clock (4) of said entity (1) on the basis of said time difference $\Delta T$,
   the method being **characterized in that**
   the step of determining a temporal correction $\varepsilon_T$ comprises the following sub-steps:

   > - determining a second updated item of time data $T_{ra}$ such that a theoretical time difference, $\Delta T_{th\_DENM}$, $\Delta T_{th\_CAM}$, between the second updated item of time data $T_{ra}$ and the first item of time data $T_e$ is equal to a determined value, and
   > - determining the temporal correction $\varepsilon_T$ based on the second updated item of time data $T_{ra}$ and on the second item of time data $T_r$.

2. Method according to Claim 1, wherein:

   - if the time difference $\Delta T$ is negative, provision is made to modify the time defined by the internal clock (4) of said entity (1), and
   - if the time difference $\Delta T$ is positive, provision is made to maintain the time defined by the internal clock (4) of said entity (1).

3. Method according to Claim 1 or 2, wherein the determined value depends on the communication technology used to transmit said message.

4. Method according to any one of Claims 1 to 3, wherein the determined value depends on the type of the message.

5. Method according to any one of Claims 1 to 4, wherein the determined value depends on the security level of said message.

6. Method according to any one of Claims 1 to 5, wherein the determined value depends on an encoding duration, $T_{enc\_DENM}$, $T_{enc\_CAM}$, of the message, said duration, $T_{enc\_DENM}$, $T_{enc\_CAM}$, preferably being determined by computing an average value of encoding durations associated with a number, N, N', of messages received by said entity (1) prior to the reception of said message.

7. Method according to any one of Claims 1 to 6, wherein the determined value depends on a decoding duration, $T_{enc\_DENM}$, $T_{enc\_CAM}$, of the message, said duration, $T_{enc\_DENM}$, $T_{enc\_CAM}$, preferably being determined by computing an average value of decoding durations associated with a number, N, N', of messages received by said entity (1) prior to the reception of said message.

8. Method according to any one of Claims 1 to 7, wherein provision is also made for a step of correcting the internal clock (4) of said entity (1) on the basis of the determined temporal correction $\varepsilon_T$.

9. Method according to any one of Claims 1 to 8, wherein provision is also made, if the time difference $\Delta T$ is positive and greater than a predetermined threshold, for a step of transmitting an alert message concerning the reliability of said message.

10. Correction device (2) for correcting the time defined by an internal clock (4) of an entity (1) able to receive signals from a satellite positioning system and to communicate with at least one other entity, said correction device (2) comprising a computer (5) programmed, when the signals do not allow satellite positioning of said entity (1), to:

- receive a message from the other entity, said message comprising a first item of time data $T_e$ associated with the transmission time of said message,
- determine a second item of time data $T_r$ associated with the time of reception of said message by said entity (1),
- compute a time difference $\Delta T$ relating to the difference between the second item of time data $T_r$ and the first item of time data $T_e$, and then
- determine a temporal correction $\varepsilon_T$ to be made to the time defined by the internal clock (4) of said entity (1) on the basis of said time difference $\Delta T$,

the device being **characterized in that** the computer (5) is furthermore programmed to:

- determine a second updated item of time data $T_{ra}$ such that a theoretical time difference, $\Delta T_{th\_DENM}$, $\Delta T_{th\_CAM}$, between the second updated item of time data $T_{ra}$ and the first item of time data $T_e$ is equal to a determined value, and
- determine the temporal correction $\varepsilon_T$ based on the second updated item of time data $T_{ra}$ and on the second item of time data $T_r$, in order to determine the temporal correction $\varepsilon_T$ to be made to the time defined by the internal clock (4) of said entity.

**Fig.1**

**Fig.2**

# Fig.3

**RÉFÉRENCES CITÉES DANS LA DESCRIPTION**

**Documents brevets cités dans la description**

- EP 3138304 A

- US 2017034800 A